# DEMANDE DE BREVET EUROPEEN

(11) **EP 1 479 814 A1**
(43) Date de publication de la demande: **24.11.2004**
(21) Numéro de dépôt: 03356037.6
(22) Date de dépôt: 03.03.2003
(51) Int. Cl.: D06F 75/18

(54) **Fer à pompe electro-osmotique**

(30) Priorité: 30.01.2003 FR 0301031
(71) Demandeur: SEB S.A., 69130 Ecully (FR)
(72) Inventeur: Compeau, Jean Louis, 38070 Saint Quentin Fallavier (FR); Debourg, Jean Pierre, 69008 Lyon (FR)
(74) Mandataire: Kiehl, Hubert

(57) **Abrégé**

Appareil de repassage (1) comprenant un réservoir d'eau (11), une pompe (2) transférant l'eau du réservoir (11) vers la chambre de vaporisation (132), remarquable en ce que la pompe (2) est une pompe électro-osmotique comprenant un corps poreux de préférence en sable alluvionnaire ou en résine échangeuse d'ions.

## Description

La présente invention concerne les fers à repasser à vapeur, et appareils similaires tels que les défroisseurs à vapeur, où l'eau d'un réservoir est amenée lentement à une chambre de vaporisation. Plus particulièrement l'invention concerne les moyens d'amener l'eau dans la chambre de vaporisation.

Les dispositifs les plus connus sont des goutte-à-goutte fonctionnant par gravité, mais qui ont l'inconvénient de ne plus fonctionner quand la pression de vapeur dans la chambre devient supérieure à celle de la colonne d'eau disponible au-dessus du goutte-à-goutte.

Une solution à ce problème a consisté à adapter une pompe électromagnétique, à piston ou à membrane actionnée par un électroaimant ou par un moteur électrique comme décrit par exemple dans les brevets FR2368862 ou FR2690932. On connaît aussi les pompes rotatives telles que les pompes centrifuges comme dans le brevet FR2688013, ainsi que les pompes péristaltiques, dont le brevet FR2691210 donne un exemple, plus rarement utilisées.

Ces types de pompe donnent satisfaction en ce qui concerne le débit et la pression. Cependant elles sont génératrices de bruits et de vibrations, leur débit n'est pas facilement modulable ce qui conduit à les faire fonctionner par à coups, et elles sont d'un prix de revient élevé.

L'invention qui suit a pour but un appareil électroménager équipé d'un réservoir d'eau de consommation courante, équipé d'une pompe silencieuse, économique et robuste pour transférer l'eau du réservoir vers la chambre de vaporisation, avec un débit continu facilement réglable avec précision et interruptible et ceci avec une pression suffisante pour vaincre la contre pression générée dans la chambre par la vaporisation pendant le repassage.

Principalement, l'objet de l'invention est atteint par un appareil de repassage comprenant un réservoir d'eau, une pompe transférant l'eau du réservoir vers la chambre de vaporisation, remarquable en ce que la pompe est une pompe électro-osmotique.

Par pompe électro-osmotique on entend un dispositif comprenant un premier compartiment, normalement relié au réservoir d'eau ou faisant partie de ce réservoir, un deuxième compartiment relié à la chambre de vaporisation de l'eau transférée par la pompe, les deux compartiments étant séparés par un corps poreux solide, chaque compartiment étant muni d'une électrode à proximité du corps poreux, les électrodes laissant passer l'eau.

Ainsi, lorsqu'on applique une tension entre les électrodes un flux d'eau se déplace du premier vers le deuxième compartiment et alimente la chambre de vaporisation.

Certes le principe d'une pompe électro-osmotique est décrit par exemple dans le document US3143691. Ce document cite des pressions obtenues avec l'eau qui atteignent l'équivalent d'une hauteur d'eau de 11 mm par volt appliqué aux électrodes, mais le dispositif décrit ne fait que transférer l'eau d'une chambre à l'autre sans débiter dans un circuit, ou sert de détecteur de pression ou de débit.

Des applications sont connues mais dans des domaines radicalement différents. Par exemple le brevet FR1446109 décrit de nombreux dispositifs utilisant une pompe de cette nature, mais avec des liquides non aqueux. On connaît aussi plusieurs brevets décrivant des applications médicales pour distribuer des médicaments en très faible quantité, des applications en chromatographie pour faire circuler un électrolyte dans une colonne, des applications en fluidique avec de faibles débits comme dans le brevet US6012902.

Toutes ces applications concernent la mise en mouvement d'électrolytes ou solutions diverses ayant des caractéristiques éloignées de l'eau courante, généralement dans des domaines très sophistiqués et avec de faibles débits.

Le brevet FR2467178 décrit un purificateur d'eau utilisant des pompes électro-osmotiques, mais les pompes utilisées ne fonctionnent que si l'eau est purifiée, grâce à des dispositifs de résines déminéralisant l'eau.

Aucun des documents précités n'envisage ni ne suggère l'utilisation d'une telle pompe dans un appareil électroménager, et encore moins dans un fer à repasser. Or, le fer réalisé avec une pompe électro-osmotique est particulièrement performant et particulièrement silencieux.

La pompe est placée entre le réservoir et la chambre de vaporisation. L'arrivée d'eau communique avec le réservoir, ou se trouve dans ce réservoir, alors que le départ est relié à la chambre de vaporisation.

Dans une réalisation, La pompe est constituée d'une enceinte en matière plastique non conductrice de l'électricité, contenant un corps poreux de grains de verre frittés, en forme de disque occupant toute la section de l'enceinte. L'entrée et la sortie du fluide sont pratiquées de part et d'autre du disque poreux. Deux électrodes sont placées de part et d'autre, au contact du verre fritté et sur le trajet du fluide. La pompe est actionnée par l'application entre les électrodes d'une tension continue de l'ordre de 10 à 200 volts. L'eau se déplace, dans ce cas d'un garnissage siliceux du disque, de l'anode vers la cathode, la caractéristique débit/pression étant linéaire, et dépendant directement de la tension appliquée.

De préférence la section du corps poreux correspondant au passage de l'eau a des dimensions supérieures à l'épaisseur du corps poreux.

Le diamètre du disque est supérieur à son épaisseur. On évite ainsi qu'une éventuelle bulle localisée dans le corps poreux interrompe le passage du courant et le fonctionnement. En effet une éventuelle bulle de gaz, générée par les électrodes et prisonnière dans le corps poreux, ne peut avoir un diamètre supérieur à l'épaisseur du corps poreux et ne peut donc pas obstruer toute la section de passage de l'eau et du courant électrique.

Dans une réalisation préférentielle, le corps poreux est constitué par un lit de grains de sable alluvionnaire de très fine granulométrie de 0 à 0,2 mm.

Le disque en fritté de verre est remplacé par du sable. On dispose ainsi d'une réalisation économique du milieu où l'électro-osmose se produit.

De préférence le corps poreux est de nature siliceuse, tel qu'en sable de quartz.

Le lit de grains est maintenu dans une enceinte en matière plastique par des électrodes en acier inoxydable ajouré de trous, placées sur les deux faces planes du lit.

De préférence les électrodes sont réalisées dans une feuille de métal inoxydable perforée ou déployée.

Les électrodes ne gênent pas le passage de l'eau dans la pompe.

De préférence les électrodes sont séparées du lit de grains qu'elles retiennent par des membranes poreuses.

Les membranes aident à la rétention du sable sans que les perforations des électrodes soient très fines.

L'alimentation électrique de la pompe, pour des raisons de sécurité comprend un transformateur ou une alimentation à découpage incluant une isolation galvanique.

Elle permet par ailleurs une variation linéaire du débit par modification de la tension continue de sortie.

L'invention sera mieux comprise au vu des exemples ci après et des dessins annexés.

La figure 1 est une vue schématique en coupe longitudinale d'un fer à repasser selon l'invention.

La figure 2 est un détail agrandi de la figure 1 montrant plus spécialement la pompe électro-osmotique.

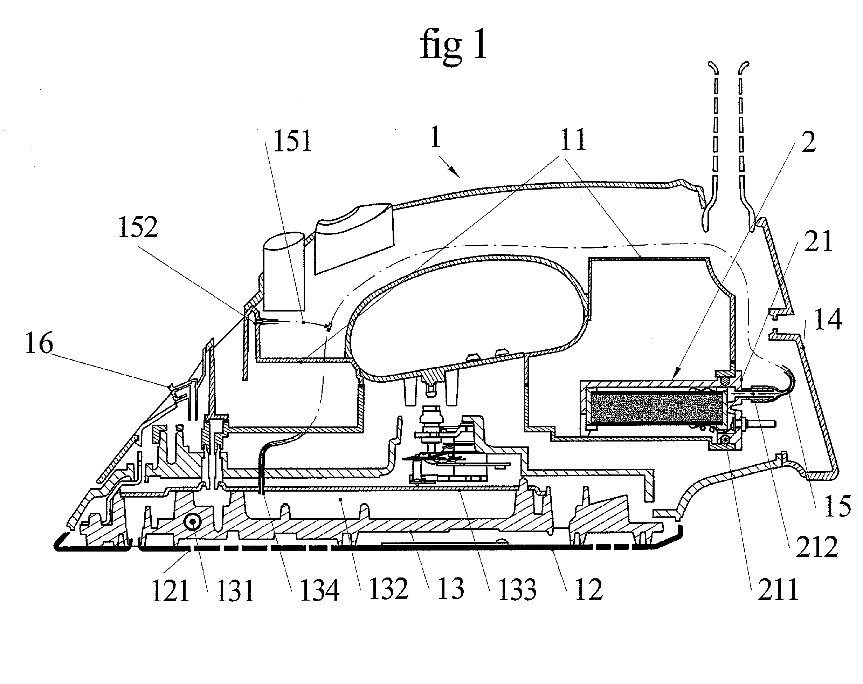

Dans une réalisation préférentielle, visible en figure 1, un fer à vapeur 1 comprend un réservoir d'eau intégré 11, une semelle 12 chauffée par un corps chauffant 13 muni d'un élément chauffant 131. Une chambre de vaporisation 132 fermée par une plaque 133 est ménagée dans le corps chauffant 13. La vapeur produite s'échappe du fer par des trous de vapeur 121 sur la face de repassage de la semelle 12.

Une pompe électro-osmotique 2 est implantée à l'arrière du réservoir d'eau 11. De préférence, la pompe se présente sous la forme d'une cassette 21 qu'on introduit dans et en bas du réservoir 11 par l'arrière du fer, avant de fermer le talon du fer par la pièce de talon 14 pendant la fabrication du fer. Un joint 211 assure la fermeture étanche de la cassette 21 sur le réservoir 11. Grâce à cette disposition, la pompe est facilement amovible et interchangeable pour un dépannage éventuel. A l'arrière du fer elle reste immergée même quand le fer est posé sur son talon 14.

La pompe 2 présente une sortie d'eau 212 accessible de l'extérieur du réservoir. La sortie d'eau 212 est reliée au point d'injection 134 de l'eau à vaporiser dans la chambre 132 par une conduite 15. La conduite 15 présente à un point haut de son circuit une dérivation 151 vers un point haut du réservoir 11. La conduite 151 est munie d'un orifice calibré 152, débouchant au point haut du réservoir 11, de quelques dixièmes de millimètre de diamètre, faible devant le diamètre de la conduite 15.

Grâce à cette disposition une entrée d'air par l'orifice calibré 152 désamorce le siphon du réservoir 11 vers la chambre de vaporisation 132 lorsque le fer est abandonné à plat à l'arrêt. En effet ce siphon, bien que très lent par suite de la forte perte de charge dans la pompe 2 arrêtée, serait possible car le réservoir 11 est placé plus haut que le point d'injection d'eau 134 dans la chambre de vaporisation 132. Lorsque la pompe fonctionne, le débit d'eau vers le réservoir 11 à travers l'orifice 152 est négligeable.

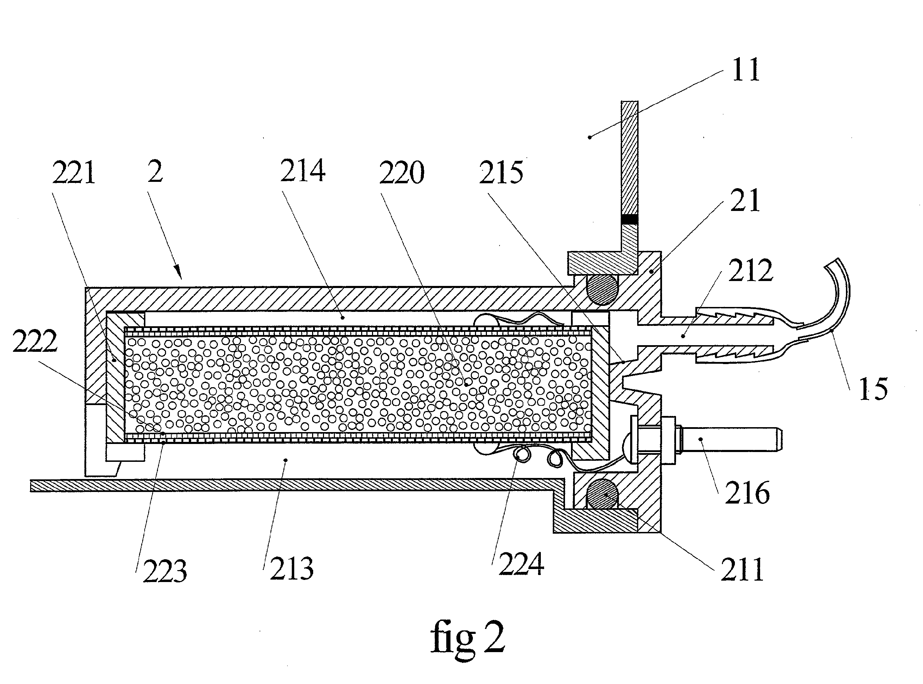

La pompe 2 mieux visible en figure 2 comporte une enveloppe 21 en forme de cassette, partagée verticalement en deux compartiments 213, 214 séparés par un corps poreux 220 en forme de galette. De préférence la galette est de forme cylindrique, d'axe vertical sur la figure 2, de diamètre 40mm, d'épaisseur 10mm, et elle est contenue latéralement par une couronne 221, en matière plastique isolante, pour en faciliter la fabrication. La couronne 221 est serrée dans la cassette 21 par des formes internes 215 ce qui assure l'étanchéité entre les compartiments 213, 214.

Le corps poreux 220 est de préférence constitué par un lit de sable alluvionnaire siliceux dont la granulométrie est fine, inférieure à 0,2 mm. Chaque face de la galette est pourvue d'une membrane cellulosique 222 perméable à l'eau, telle qu'un papier filtre, en contact avec le corps poreux 220, et d'une électrode 223 en feuille d'acier inoxydable déployée qui maintient le corps poreux. Chaque électrode est reliée par une connexion soudée telle que 224 à une broche telle que 216 traversant la cassette 21 dans sa paroi externe au réservoir 11. Dans une version voisine les électrodes sont en feuille de titane déployée, de préférence platinée.

Un connecteur, non représenté, relie les broches 216 à une source de courant continu, l'électrode inférieure constituant l'anode et l'électrode supérieure la cathode. La source de courant continu disposée dans la poignée du fer est un transformateur ou une alimentation à découpage incluant une isolation galvanique par rapport au secteur et à la masse du fer. La tension appliquée entre les électrodes pendant le fonctionnement de la pompe 2, peut être réglée par l'utilisateur, de 10 à 200 Volts.

Le compartiment inférieur 213 de la pompe 2 est ouvert sur le fond et latéralement dans le réservoir 11, de sorte que dès le remplissage du réservoir 11 l'eau entre dans la cassette et humecte le corps poreux 220 par capillarité. Le compartiment supérieur 214 est relié à la sortie 212 de la pompe 2.

Lorsque le fer est prêt et que l'utilisateur veut produire de la vapeur, il règle la tension de sortie de la source de courant continu par un bouton approprié qui peut être gradué en débit de vapeur, et commande l'émission de vapeur en mettant la source de courant en service. La tension appliquée aux électrodes de la pompe 2 provoque un courant ionique sur les parois du réseau capillaire constitué par les grains de sable, entraînant ainsi les molécules d'eau en direction de la cathode dans ce cas d'un corps poreux siliceux. L'eau passe du réservoir 11 au compartiment 213 puis à travers le corps poreux 220 elle atteint le compartiment 214 et sort de la pompe 2 par l'embout 212 et la conduite 15, pour atteindre ensuite le point d'injection 134 de l'eau dans la chambre de vaporisation.

L'épaisseur du corps poreux étant constante, le débit d'eau est directement proportionnel à la tension appliquée entre les électrodes. S'il se produit un faible dégagement de gaz aux électrodes par électrolyse de l'eau, les gaz se rassemblent en bulles. Le diamètre des bulles ne pouvant excéder l'épaisseur du disque, laquelle est plus petite que son diamètre, les bulles ne peuvent pas interrompre le courant ionique et arrêter intempestivement la pompe. Au contraire, les bulles sont entraînées et évacuées avec le courant d'eau.

Le dispositif décrit produit, sous une tension continue de 200 volts, un débit d'eau d'environ 20 g/min sous une pression de quelques dizaines de millibars, très supérieure à la colonne d'eau disponible dans le fer au-dessus du point d'injection 134, largement suffisante pour vaincre la contre pression due à la vaporisation dans la chambre 132 et assurer un repassage facile. Aucune pièce mécanique n'étant en mouvement, le pompage est parfaitement silencieux.

Lorsque l'utilisateur termine le repassage, et s'il laisse le fer refroidir à plat posé sur la semelle 12, la conduite 15 se vide lentement de son eau par le point d'injection 134. La prise d'air 152 évite une aspiration du réservoir par siphon à travers la pompe 2.

Dans une version voisine, la conduite 15 comporte, en amont de la dérivation 151 une vanne 3 voies qui permet, sur commande de l'utilisateur, d'alimenter un gicleur de pulvérisation 16 situé à l'avant du fer 1, pour humidifier le tissu à repasser.

Dans une autre version, le corps poreux 220 est constitué par un lit de grains mélangés comprenant des grains d'une résine échangeuse d'ions, de fine granulométrie. La polarité de la source de courant est choisie en fonction de la nature des grains majoritaires. Le corps poreux a la double fonction de substrat capillaire pour l'électro-osmose et de système de déminéralisation. La sortie d'eau 212 et l'extrémité correspondante de la conduite 15 sont modifiées pour faciliter une connexion rapide convenant à des échanges de cassette relativement fréquents dus à la durée limitée des résines.

Par ces moyens on obtient un appareil de repassage dont la pompe silencieuse, économique et robuste transfère l'eau du réservoir vers la chambre de vaporisation, avec un débit continu facilement réglable et avec une pression suffisante pour vaincre la contre pression générée dans la chambre par la vaporisation pendant le repassage.

## Revendications

1. Appareil de repassage (1) comprenant un réservoir d'eau (11), une pompe (2) transférant l'eau du réservoir (11) vers une chambre de vaporisation (132), **caractérisé en ce que** la pompe (2) est une pompe électro-osmotique comprenant un corps poreux (220).

2. Appareil selon la revendication 1 **caractérisé en ce que** la section du corps poreux (220) correspondant au passage de l'eau a des dimensions supérieures à l'épaisseur du corps poreux (220).

3. Appareil selon l'une des revendications précédentes **caractérisé en ce que** le corps poreux (220) est constitué par un lit de grains de sable alluvionnaire de très fine granulométrie de 0 à 0,2 mm.

4. Appareil selon l'une des revendications précédentes **caractérisé en ce que** le corps poreux est de nature siliceuse

5. Appareil selon l'une des revendications précédentes **caractérisé en ce que** le lit de grains est maintenu dans une enceinte (21, 221) en matière plastique par des électrodes (223) en acier inoxydable ou en titane ajourées de trous, placées sur les deux faces planes du lit.

6. Appareil selon la revendication précédente **caractérisé en ce que** les électrodes (223) sont séparées du lit qu'elles retiennent par des membranes poreuses (222).

7. Appareil selon l'une des revendications précédentes **caractérisé en ce que** l'alimentation électrique de la pompe (2) comprend un transformateur ou une alimentation à découpage incluant une isolation galvanique.

8. Appareil selon l'une des revendications précédentes **caractérisé en ce que** la pompe (2) est réalisée sous forme d'une cassette (21) facilement amovible dont la sortie d'eau (212) est reliée à un point (134) d'injection de l'eau dans la chambre de vaporisation (132) par une conduite (15).

9. Appareil selon la revendication précédente **caractérisé en ce que** la conduite (15) présente à un point haut de son circuit une dérivation (151) vers un point haut du réservoir (11), la dérivation (151) étant munie d'un orifice calibré (152).

10. Fer à repasser selon l'une des revendications précédentes **caractérisé en ce que** la conduite (15) comporte, en amont de la dérivation (151) une vanne 3 voies pour alimenter un gicleur de pulvérisation (16) situé à l'avant du fer (1).

11. Appareil selon l'une des revendications 1-2, 5-10 **caractérisé en ce que** le corps poreux (220) est constitué par un lit de grains mélangés comprenant des grains d'une résine échangeuse d'ions.
